# EUROPEAN PATENT SPECIFICATION

(11) **EP 3 214 287 B1**
(45) Date of publication and mention of the grant of the patent: **05.12.2018**
(21) Application number: 15855507.8
(22) Date of filing: 19.08.2015
(51) Int. Cl.: F02B 39/14, F01P 7/14, F02B 39/16, F01D 25/12, F01D 25/14, F02C 6/12

(54) **SUPERCHARGER AND ENGINE**
TURBOLADER UND MOTOR
COMPRESSEUR D'ALIMENTATION ET MOTEUR

(30) Priority: 28.10.2014 JP 2014219570
(43) Date of publication of application: 06.09.2017
(73) Proprietor: Mitsubishi Heavy Industries, Ltd., Tokyo 108-8215 (JP)
(72) Inventor: SHIRAISHI, Keiichi, Nagasaki-shi Nagasaki 850-8610 (JP); SUGIMOTO, Koichi, Tokyo 108-8215 (JP)
(74) Representative: Hoffmann Eitle
(86) International application number: PCT/JP2015/073192
(87) International publication number: WO 2016/067715

(56) References cited:
- WO-A1-2008/023067
- JP-A- S62 101 837
- JP-A- 2009 287 513
- JP-A- 2011 256 832
- JP-A- 2011 256 832
- JP-A- 2013 130 086
- JP-A- 2013 130 086

## Description

### Technical Field

The present invention relates to a turbocharger of which a compressor impeller is indirectly cooled by oil supplied to a bearing of a turbine shaft, and an engine including the turbocharger.

### Background Art

A turbocharger provided on an engine, such as a large marine diesel engine, includes a centrifugal compressor that compresses intake air. The centrifugal compressor compresses the intake air of an engine by a compressor impeller that is provided on a turbine shaft rotationally driven by the exhaust gas of the engine so as to rotate integrally with the turbine shaft; increases the density of air, and supplies the air to the engine.

When the pressure ratio (boost pressure) of the centrifugal compressor reaches about 5 (bar) close to the maximum boost pressure, the temperature of compressed air becomes 230°C or more. For this reason, a thermal load applied to the compressor impeller is increased, and the material strength, particularly, high-temperature creep strength of the compressor impeller, which is made of light metal, such as an aluminum alloy, for the reduction of weight is reduced. As a result, there is a problem that the life of the compressor impeller is shortened.

Further, generally, a labyrinth seal is provided on the outer peripheral side of the back face of the compressor impeller to inhibit compressed air, which is present at the outlet of the compressor impeller, from going around to the back face side of the impeller and to inhibit the compressed air from flowing into a bearing portion. However, since a peripheral speed is high and a surface area is also large in the vicinity of the labyrinth seal, the generation of heat, which is caused by friction between the compressor impeller and compressed air, cannot also be ignored.

For this reason, JP 2011-256832 A discloses a turbocharger in which an annular cooling space positioned on the back face side of a compressor impeller is formed in a casing in which a compressor impeller is received, a part of oil to be supplied to a bearing of a turbine shaft is supplied to the cooling space, and the casing is cooled by the oil. Since the casing is cooled by oil as described above, the heat of the compressor impeller, which is close to the casing and is rotating, can also be reduced.

JP 2011-256832 A refers to a supercharger which includes a rotary shaft supported with a bearing, an impeller fixed on the rotary shaft and radially sending outward a gaseous body, a compressor housing arranged by surrounding the impeller, and the housing member forming an annular diffuser for surrounding the impeller between the housing member and the compressor housing and arranged between the bearing and the impeller, and has a structure wherein a space formed at a bearing side of the diffuser in an axis L direction of the rotary shaft and a supply port for supplying the cooling liquid to an inner wall surface of the space at a diffuser side are arranged on the housing member.

Another document is WO 2008/023067 A1 referring to an emergency oil tank.

Yet another document is JP 2013-130086 A.

### Summary of Invention

### Technical Problem

Since the turbine shaft of the turbocharger continue to rotate for a moment due to inertia even though the engine stops, oil needs to continue to be supplied to the bearing even during the rotation of the turbine shaft caused by inertia. However, since an oil pump also stops at the same time as the stop of the engine, the supply of oil to the bearing stops. For this reason, although not shown in JP 2011-256832 A, an oil tank should be provided on the upstream side of an oil supply pipe for supplying oil to the bearing, should store a predetermined amount of oil, and should supply oil required during the rotation of the turbine shaft caused by inertia.

However, in the structure of JP 2011-256832 A, an oil supply passage for the cooling of the compressor impeller is branched from the downstream side of the above-mentioned oil tank (not shown). For this reason, after the engine stops, oil stored in the oil tank flows into the annular cooling space through the oil supply passage. Accordingly, the amount of oil, which is to be supplied to the bearing during the rotation of the turbine shaft caused by inertia, is reduced. For this reason, there is a concern that the lubrication of the bearing may become insufficient.

In regard to the supply of oil to the bearing from the oil tank during the rotation of the turbine shaft caused by inertia, oil does not smoothly flow down to the bearing if the oil stored in the oil tank is not substituted by air. For this reason, in the past, the oil tank has been provided with an air vent passage connected to the outside of the oil tank. However, the air vent passage needs to lead air to the upper portion of the oil tank after the stop of the oil pump and needs to smoothly substitute oil by air. For this purpose, the air vent passage needs to be erected from the bottom of the oil tank in the shape of a pipe. Accordingly, the air vent passage complicates the structure of the oil tank and causes manufacturing costs to increase. Particularly, since the pipe-shaped air vent passage needs to be provided for only the purpose of air vent, cost-effectiveness was low.

The invention has been made in consideration of the above-mentioned circumstances, and an object of the invention is to provide a turbocharger that can achieve both the cooling of a compressor impeller during the operation of an engine and a function as an air vent of an oil tank supplying oil to a bearing after the stop of the engine, and an engine including the turbocharger.

### Solution to Problem

The invention employs the following means to achieve the above-mentioned object.

That is, a turbocharger according to the invention includes a turbine shaft of which one end is connected to a compressor impeller and which is supported by a bearing, a bearing pedestal that receives the turbine shaft, an oil tank that is provided in the bearing pedestal, a bearing oil passage that connects the oil tank to the bearing, an impeller cooling channel that is formed in the bearing pedestal and is positioned on a back face side of the compressor impeller, and a cooling oil supply passage that connects the impeller cooling channel to the oil tank. The height of an inlet opening of the cooling oil supply passage is higher than the height of an inlet opening of the bearing oil passage in the oil tank.

During the operation of an engine, oil, which is supplied from the oil pump, is stored in the oil tank of the turbocharger, and the oil stored in the oil tank is supplied to the bearing of the turbine shaft through the bearing oil passage, so that the bearing is lubricated.

The oil stored in the oil tank is also supplied to the impeller cooling channel, which is positioned on the back face side of the compressor impeller, through the cooling oil supply passage. Accordingly, since the heat of the compressor impeller is reduced by the heat transfer from the compressor impeller to the oil that flows in the impeller cooling channel, a thermal load applied to the compressor impeller is reduced. As a result, the life of the compressor impeller can be lengthened.

Even though the engine stops, the turbine shaft (the compressor impeller) of the turbocharger continues to rotate for a moment due to inertia. At this time, the supply of oil to the oil tank from the oil pump stops. However, since oil stored in the oil tank continues to be supplied to the bearing of the turbine shaft, the lubrication of the bearing is continued and the bearing is protected.

In the oil tank, the height of the inlet opening of the cooling oil supply passage, which is connected to the impeller cooling channel, is higher than the height of the inlet opening of the bearing oil passage connected to the bearing. For this reason, as the surface of oil is lowered, the inlet opening of the cooling oil supply passage protrudes from the surface of oil and the supply of oil to the cooling oil supply passage and the impeller cooling channel stops first. Then, the inlet opening of the bearing oil passage protrudes from the surface of oil and the supply of oil to the bearing stops.

In this way, the supply of oil to the impeller cooling channel stops ahead of the supply of oil to the bearing. For this reason, it is possible to prevent oil, which is stored in the oil tank, from flowing into the impeller cooling channel of which the necessity of cooling is less during the rotation of the turbine shaft, which is caused by inertia, and to preferentially supply oil to the bearing. A timing in which the supply of oil to the impeller cooling channel stops can be adjusted by the change of the height of the inlet opening of the cooling oil supply passage.

Moreover, as oil flows down to the bearing from the oil tank during the rotation of the turbine shaft caused by inertia, air flows into the oil tank through the impeller cooling channel and the cooling oil supply passage and is substituted by the oil flowing down. That is, the impeller cooling channel and the cooling oil supply passage function as an air vent passage that is used to introduce air into the oil tank. Accordingly, oil stored in the oil tank can be made to smoothly flow to the bearing.

In this way, the compressor impeller can be cooled during the operation of the engine and the impeller cooling channel and the cooling oil supply passage can be utilized as an air vent passage of the oil tank after the stop of the engine. Accordingly, both the cooling of the compressor impeller and a function as an air vent of the oil tank can be achieved by a rational structure.

In the above-mentioned configuration, it is preferable that the impeller cooling channel is provided so as to overlap the range of a labyrinth seal provided on the back face side of the compressor impeller.

Since a frictional heat generated between a portion of the compressor impeller on which the labyrinth seal is provided and compressed air is also applied to the portion of the compressor impeller on which the labyrinth seal is provided, the portion of the compressor impeller on which the labyrinth seal is provided is a portion of which the temperature becomes the highest in the compressor impeller and the surface area of a portion of the labyrinth seal facing the compressor impeller and the surface area of a portion of the labyrinth seal facing a casing are large. For this reason, when the impeller cooling channel is made adjacent to the portion of the compressor impeller on which the labyrinth seal is provided, the vicinity of the labyrinth seal can be efficiently cooled by the oil that flows in the impeller cooling channel.

In the above-mentioned configuration, it is preferable that the impeller cooling channel is recessed in a surface, which is in contact with the bearing pedestal, of a labyrinth seal ring forming the labyrinth seal.

Since the labyrinth seal ring is a component that is originally formed by machining, it is possible to easily form the impeller cooling channel by merely performing additional machining on the labyrinth seal ring. Further, it is possible to easily renovate an existing turbocharger that is not provided with the impeller cooling channel.

In the above-mentioned configuration, it is preferable that the cooling oil supply passage includes an internal passage that is formed in the bearing pedestal and is connected to the impeller cooling channel from the vicinity of a bottom of the oil tank, and a pipe passage that extends upward in the oil tank from an opening of the internal passage close to the oil tank, and an upper end portion of the pipe passage serves as the inlet opening of the cooling oil supply passage.

According to this configuration, the height of the inlet opening of the cooling oil supply passage can be increased by an increase in the length of the pipe passage forming the cooling oil supply passage. Accordingly, a difference between the height of the inlet opening of the cooling oil supply passage and the height of the inlet opening of the bearing oil passage can be increased, so that the amount of oil to be supplied to the bearing after the stop of the turbocharger can be increased.

In the above-mentioned configuration, it is preferable that an uneven face is formed on an inner surface of the impeller cooling channel. Since the uneven face is formed on the inner surface of the impeller cooling channel as described above, the surface area of the inner surface of the impeller cooling channel is increased. For this reason, heat is satisfactorily transferred from the compressor impeller to the oil flowing in the impeller cooling channel, so that the compressor impeller can be effectively cooled.

In the above-mentioned configuration, it is preferable that the cooling oil supply passage communicates with an upper portion of the impeller cooling channel, a cooling oil discharge passage for discharging oil is provided at a lower portion of the impeller cooling channel, and the diameter of the cooling oil discharge passage is smaller than the diameter of the cooling oil supply passage.

According to this configuration, the oil, which flows into the impeller cooling channel from the cooling oil supply passage, is likely to stagnate in the impeller cooling channel. For this reason, outside air does not easily flow in from the cooling oil discharge passage during the operation of the engine. Accordingly, a temperature rise, which is caused when air stagnates in the impeller cooling channel, can be prevented. Further, since the impeller cooling channel is sufficiently filled with oil, the entire compressor impeller can be uniformly cooled. Accordingly, the cooling performance of the compressor impeller can be improved.

Further, the engine according to the invention includes a turbocharger according to any one of the above-mentioned aspects. Accordingly, the above-mentioned actions and effects can be obtained from the engine.

### Advantageous Effects of Invention

As described above, according to the turbocharger of the invention and the engine including the turbocharger, both the cooling of the compressor impeller during the operation of the engine and a function as an air vent of the oil tank supplying oil to the bearing after the stop of the engine can be achieved by a simple and rational structure.

### Brief Description of Drawings

Fig. 1 is a longitudinal sectional view showing an example of a turbocharger according to the invention.
Fig. 2 is a longitudinal sectional view enlarging a portion II of Fig. 1 and showing a first embodiment of the invention.
Fig. 3 is a longitudinal sectional view taken along line III-III of Fig. 2.
Fig. 4 is a longitudinal sectional view showing a second embodiment of the invention.

### Description of Embodiments

Embodiments of the invention will be described below with reference to the drawings.

### [First embodiment]

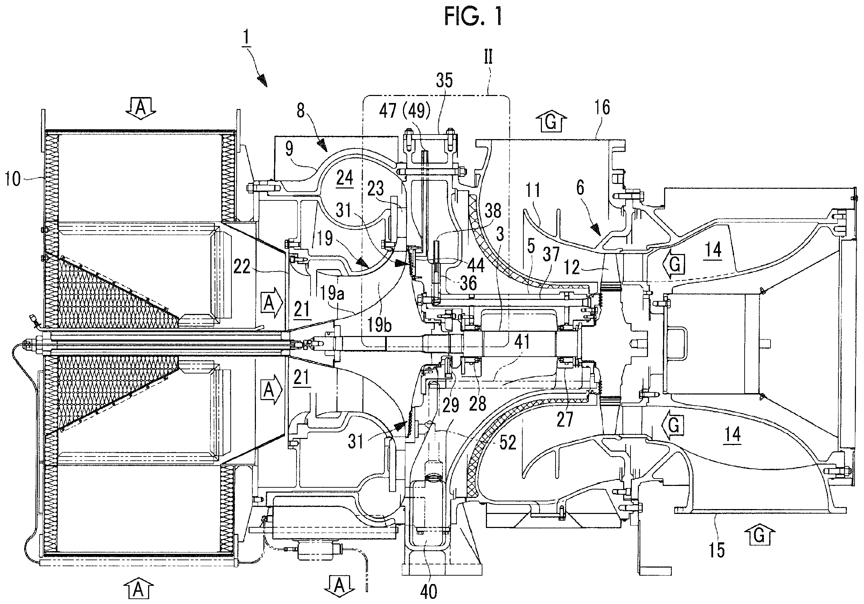

Fig. 1 is a longitudinal sectional view showing an example of a turbocharger according to the invention.

A turbocharger 1 of this embodiment is a device that improves the combustion efficiency of a large marine diesel engine by increasing the pressure of air (gas), which is to be supplied to the large marine diesel engine used for a ship, to atmospheric pressure or more. The turbocharger 1 of this embodiment includes a turbine shaft 3, a bearing pedestal 5, an exhaust gas turbine 6, a centrifugal compressor 8, and an intake air silencer 10.

The exhaust gas turbine 6 includes a turbine housing 11 and turbine blades 12. The turbine housing 11 is a hollow cylindrical member that is disposed around the axis of the turbine shaft 3, and is provided with an exhaust gas passage 14 that is formed along the axial direction of the turbine shaft 3 and an exhaust gas inlet 15 and an exhaust gas outlet 16 that are opened in the outer circumferential direction of the turbocharger 1. The turbine blades 12 are received in the exhaust gas passage 14 .

The centrifugal compressor 8 includes a compressor housing 9 and a compressor impeller 19. An intake air channel 21 is formed in the compressor housing 9, and is provided with an intake air inlet 22, a diffuser 23, a spiral scroll passage 24, and a compressed intake air outlet (not shown).

The compressor impeller 19 is received in the intake air channel 21. The compressor impeller 19 is made of, for example, an aluminum alloy; a hub 19a, which forms the central portion of the compressor impeller 19, is formed in a shape in which the thickness of the hub 19a increases toward the downstream side (the bearing pedestal 5) from the upstream side in the direction of the flow of intake air; and a plurality of fins (blades) 19b protrude from the outer peripheral surface of the hub 19a.

The bearing pedestal 5 horizontally supports the turbine shaft 3 therein. The turbine shaft 3 is rotatably supported by a pair of radial bearings 27 and 28 and one thrust bearing 29 so as to be immovable in the axial direction. The turbine blades 12 are provided at one end of the turbine shaft 3 and the compressor impeller 19 is provided at the other end of the turbine shaft 3 so that the turbine blades 12 and the compressor impeller 19 are coaxial with each other and rotate as a single body.

The intake air silencer 10 is provided with a sound absorbing material (not shown). The sound absorbing material absorbs a part of noise, which is generated in the centrifugal compressor 8, and reduces the level of noise.

During the operation of the large marine diesel engine, exhaust gas G of the large marine diesel engine having high temperature and high pressure flows into the exhaust gas turbine 6 of the turbocharger 1 from the exhaust gas inlet 15. The exhaust gas G flows in the exhaust gas passage 14 in the direction of an arrow and is discharged from the exhaust gas outlet 16, so that the turbine blades 12 are rotationally driven at a high speed. Accordingly, the turbine shaft 3 and the compressor impeller 19 are rotated at high speed as a single body.

In the centrifugal compressor 8, due to the rotation of the compressor impeller 19, gas A, such as air or gas, is taken into the intake air channel 21 through the intake air silencer 10 and the intake air inlet 22, is compressed, and is discharged in a centrifugal direction. The discharged gas A is discharged from the compressed intake air outlet (not shown) through the diffuser 23 and the spiral scroll passage 24, and is supplied to the large marine diesel engine (not shown).

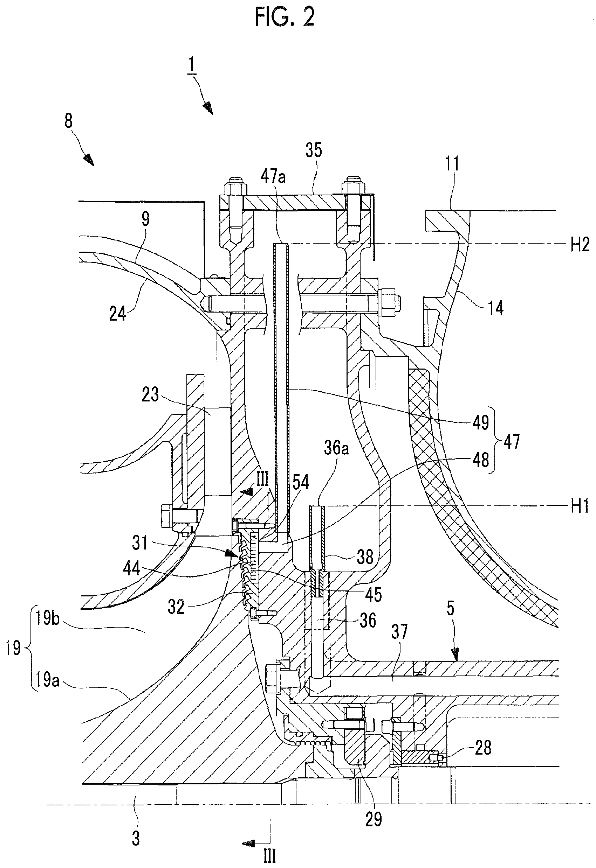

In the turbocharger 1 of this embodiment, a labyrinth seal 31 is provided on the outer peripheral side of the back face of the compressor impeller 19 to inhibit a part of the gas A, of which the temperature becomes high by the compression thereof, from going around to the back face side of the compressor impeller 19 and to inhibit a part of the gas A from flowing into a bearing portion. As enlarged in Fig. 2, the labyrinth seal 31 includes a plurality of annular fins, which are close to each other and are alternately engaged with each other, to inhibit compressed gas from passing. The plurality of annular fins are formed between the back face of the outer peripheral portion of the hub 19a of the compressor impeller 19 and an annular labyrinth seal ring 32 that is fixed to the bearing pedestal 5 so as to face the back face of the outer peripheral portion of the hub 19a.

An oil tank 35 is provided in the bearing pedestal 5 so as to be interposed between the turbine housing 11 and the compressor housing 9. The oil tank 35 is formed so as to be positioned above the turbine shaft 3 and on the back face side of the compressor impeller 19, and is adapted to capable of storing a predetermined amount of oil. A bearing oil passage 36 extends downward from the bottom of the oil tank 35, and is connected to a bearing oil passage 37 that is formed in the bearing pedestal 5 along the axial direction of the turbine shaft 3.

The bearing oil passage 37 is connected to the radial bearings 27 and 28 and the thrust bearing 29. A short pipe member 38, which extends in the vertical direction, is fixed to an inlet portion of the bearing oil passage 36 that is opened to the bottom of the oil tank 35. As enlarged in Fig. 2, the upper end portion of the pipe member 38 serves as an inlet opening 36a of the bearing oil passage 36. The height of the inlet opening 36a is denoted by H1. The pipe member 38 may be omitted so that the inlet opening 36a serves as an inlet portion of the bearing oil passage 36.

As shown in Fig. 1, an oil collection chamber 40 is provided on the side of the turbine shaft 3 opposite to the oil tank 35, that is, below the oil tank 35. An oil collection channel 41, which collects oil from each of the bearings 27, 28, and 29, is connected to the oil collection chamber 40.

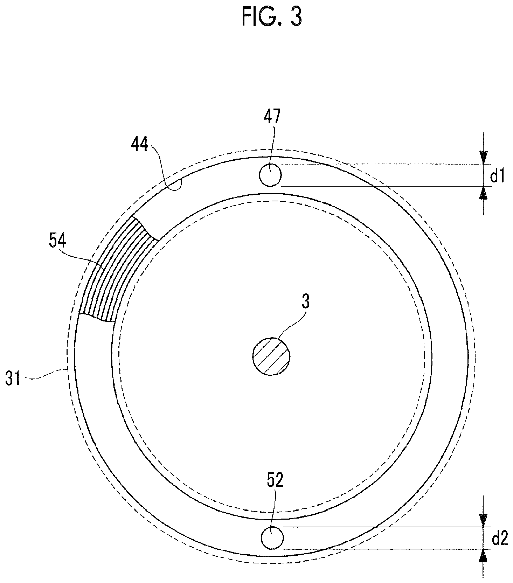

As also shown in Fig. 2, an impeller cooling channel 44, which is positioned on the back face side of the compressor impeller 19, is formed in the bearing pedestal 5. The impeller cooling channel 44 has an annular shape as shown in Fig. 3, and is provided so as to overlap the range of the labyrinth seal 31, which is provided on the back face side of the compressor impeller 19, when seen in the axial direction of the turbine shaft 3.

Specifically, an annular groove 45 is recessed in the surface (the back face) of the labyrinth seal ring 32 that is in contact with the bearing pedestal 5 as shown in Fig. 2. Accordingly, when the labyrinth seal ring 32 is fixed to the bearing pedestal 5, the groove 45 is closed and the internal space of the groove 45 serves as the impeller cooling channel 44.

As shown in Figs. 2 and 3, the impeller cooling channel 44 is connected to the oil tank 35 through a cooling oil supply passage 47 that communicates with the upper portion of the impeller cooling channel 44. As shown in Fig. 2, the cooling oil supply passage 47 includes an internal passage 48 that is formed in the bearing pedestal 5 and a pipe passage 49 that stands up in the oil tank 35. The internal passage 48 extends along the axial direction of the turbine shaft 3 toward the oil tank 35 from the upper portion of the impeller cooling channel 44 once, is bent upward at a right angle immediately before reaching the oil tank 35, and is opened to the oil tank 35.

The lower end portion of the pipe passage 49 is fixed to the opening of the internal passage 48 that is close to the oil tank 35. Further, the upper end portion of the pipe passage 49 serves as an inlet opening 47a of the cooling oil supply passage 47. The height H2 of the inlet opening 47a is higher than the height H1 of the inlet opening 36a of the bearing oil passage 36. For example, a difference between the height H1 and the height H2 is set in the range of about 50 mm to 500 mm.

As shown in Figs. 1 and 3, a cooling oil discharge passage 52, which is connected to the oil collection chamber 40, communicates with the lower portion of the impeller cooling channel 44. The diameter d2 of the cooling oil discharge passage 52 is smaller than the diameter d1 of the cooling oil supply passage 47 that communicates with the upper portion of the impeller cooling channel 44. For example, if the diameter d1 of the cooling oil supply passage 47 is set in the range of about 10 mm to 50 mm, the diameter d2 of the cooling oil discharge passage 52 is set in the range of about 8 mm to 40 mm.

As shown in Figs. 2 and 3, an uneven face 54 is formed on the inner surface, which are orthogonal to the turbine shaft 3, of the impeller cooling channel 44 (the groove 45), so that the surface area of the inner surface is increased. The shape of a concentric circle, which is formed along the circumferential direction of the annular impeller cooling channel 44, and the shape of a plurality of fins can be exemplified as the uneven face 54, but other shapes, for example, a cross-sectional shape in which peaks and valleys are alternately combined in a concentric circular shape may be used.

During the operation of the large marine diesel engine (not shown), in the turbocharger 1 of this embodiment having the above-mentioned configuration, oil, which is supplied from an oil pump provided on the engine, is stored in the oil tank 35, and the oil is supplied to the respective bearings 27, 28, and 29 through the bearing oil passages 36 and 37, is collected in the oil collection chamber 40 through the oil collection channel 41 after lubricating the respective bearings 27, 28, and 29, and is returned to the oil pump again.

The oil of the oil tank 35 is also supplied to the impeller cooling channel 44 through the cooling oil supply passage 47. Accordingly, since the heat of the compressor impeller 19 is reduced by the transfer of heat from the compressor impeller 19 to the oil that flows in the impeller cooling channel 44, a thermal load applied to the compressor impeller 19 is reduced. As a result, the life of the compressor impeller 19 can be lengthened. The oil, which is supplied to the impeller cooling channel 44, is discharged from the cooling oil discharge passage 52 and is returned to the oil collection chamber 40.

Even though the large marine diesel engine stops, the turbine shaft 3 and the compressor impeller 19 continue to rotate for a moment due to inertia. At this time, the supply of oil to the oil tank 35 from the oil pump stops. However, since oil stored in the oil tank 35 continues to be supplied to the respective bearings 27, 28, and 29 from the bearing oil passages 36 and 37, the lubrication of the respective bearings 27, 28, and 29 is continued and the respective bearings are protected.

In the oil tank 35, the height H2 of the inlet opening 47a of the cooling oil supply passage 47, which is connected to the impeller cooling channel 44, is higher than the height H1 of the inlet opening 36a of the bearing oil passages 36 and 37 connected to the bearings 27, 28, and 29. For this reason, as the surface of oil is lowered, the inlet opening 47a of the cooling oil supply passage 47 protrudes from the surface of oil and the supply of oil to the cooling oil supply passage 47 and the impeller cooling channel 44 stops first. Next, the inlet opening 36a of the bearing oil passage 36 protrudes from the surface of oil and the supply of oil to the bearings 27, 28, and 29 stops.

In this way, the supply of oil to the impeller cooling channel 44 stops ahead of the supply of oil to the bearings 27, 28, and 29. For this reason, it is possible to prevent oil, which is stored in the oil tank 35, from flowing into the impeller cooling channel 44 of which the necessity of cooling is less during the rotation of the turbine shaft 3, which is caused by inertia, and to preferentially supply oil to the bearings 27, 28, and 29. A timing in which the supply of oil to the impeller cooling channel 44 stops can be easily adjusted by the change of the height H2 of the inlet opening of the cooling oil supply passage 47 (the length of the pipe passage 49). The pipe passage 49 may be formed of a telescopic pipe.

Moreover, as oil flows down to the bearings 27, 28, and 29 from the oil tank 35 during the rotation of the turbine shaft 3 caused by inertia, air flows into the oil tank 35 through the impeller cooling channel 44 and the cooling oil supply passage 47 and is substituted by the oil flowing down. That is, the impeller cooling channel 44 and the cooling oil supply passage 47 function as an air vent passage that is used to introduce air into the oil tank 35. Accordingly, even though the oil tank 35 is not provided with an exclusive air vent passage, oil stored in the oil tank 35 can be made to smoothly flow to the bearings 27, 28, and 29.

In this way, the compressor impeller 19 can be cooled and the impeller cooling channel 44 and the cooling oil supply passage 47 can be utilized as an air vent passage of the oil tank 35 during the stop of the large marine diesel engine. In this way, both the cooling of the compressor impeller 19 and a function as an air vent of the oil tank 35 can be achieved by a rational structure.

In the centrifugal compressor 8, the impeller cooling channel 44 is provided so as to overlap the range of the labyrinth seal 31 that is provided on the back face side of the compressor impeller 19. Since a frictional heat generated between a portion of the compressor impeller on which the labyrinth seal 31 is provided and compressed air is also applied to the portion of the compressor impeller on which the labyrinth seal 31 is provided, the portion of the compressor impeller on which the labyrinth seal 31 is provided is a portion of which the temperature becomes the highest in the compressor impeller 19 and the surface area of a portion of the labyrinth seal 31 facing the compressor impeller 19 and the surface area of a portion of the labyrinth seal 31 facing a casing 2 are large. For this reason, when the impeller cooling channel 44 is made adjacent to the portion of the compressor impeller on which the labyrinth seal 31 is provided, the vicinity of the labyrinth seal 31 can be efficiently cooled by the oil that flows in the impeller cooling channel 44.

The groove 45 is recessed in the surface, which is in contact with the bearing pedestal 5, of the labyrinth seal ring 32 forming the labyrinth seal 31, so that the impeller cooling channel 44 is formed. Since the labyrinth seal ring 32 is a component that is originally formed by machining, it is possible to easily form the groove 45 by merely performing additional machining on the labyrinth seal ring 32 and to form the impeller cooling channel 44. Further, it is possible to easily form the impeller cooling channel 44 by machining a labyrinth seal ring 32 of an existing turbocharger in which the impeller cooling channel 44 is not provided.

Furthermore, in the centrifugal compressor 8, the cooling oil supply passage 47, which supplies oil to the impeller cooling channel 44, includes the internal passage 48 that is formed in the bearing pedestal 5 and the pipe passage 49 that extends upward in the oil tank 35 from the opening of the internal passage 48 close to the oil tank 35. Further, the upper end portion of the pipe passage 49 serves as the inlet opening 47a of the cooling oil supply passage 47.

According to this configuration, the height of the inlet opening 47a is increased by an increase in the length of the pipe passage 49, so that a difference between the height H2 of the inlet opening 47a and the height H1 of the inlet opening 36a of the bearing oil passage 36 can be increased. Accordingly, the amount of oil to be supplied (a time in which oil continues to be supplied) to the bearings 27, 28, and 29 after the stop of the large marine diesel engine can be increased. Alternatively, the time in which oil continues to be supplied can be appropriately set by a change in the length of the pipe passage 49.

Since the uneven face 54 is formed on the inner surface of the impeller cooling channel 44 (the groove 45) in the centrifugal compressor 8, the surface area of the inner surface of the impeller cooling channel 44 is increased. For this reason, heat is satisfactorily transferred from the compressor impeller 19 to the oil flowing in the impeller cooling channel 44, so that the compressor impeller 19 can be effectively cooled.

In addition, the diameter d2 of the cooling oil discharge passage 52, which communicates with the lower portion of the impeller cooling channel 44, is set to be smaller than the diameter d1 of the cooling oil supply passage 47 that communicates with the upper portion of the impeller cooling channel 44. For this reason, the oil, which flows into the impeller cooling channel 44 from the cooling oil supply passage 47, is likely to stagnate in the impeller cooling channel 44. In other words, oil, which is present in the impeller cooling channel 44, is not easily discharged from the cooling oil discharge passage 52.

For this reason, outside air does not easily flow in from the cooling oil discharge passage 52 during the operation of the centrifugal compressor 8. Accordingly, a temperature rise, which is caused when air stagnates in the impeller cooling channel 44, can be prevented. Further, since the impeller cooling channel 44 is sufficiently filled with oil, the entire compressor impeller 19 can be uniformly cooled. Accordingly, the cooling performance of the compressor impeller 19 can be improved.

### [Second embodiment]

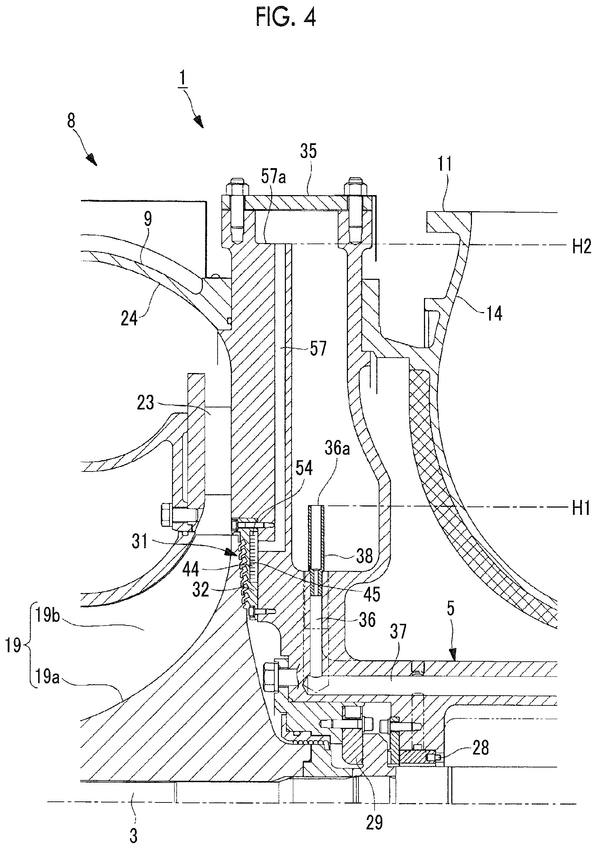

Fig. 4 is a longitudinal sectional view showing a second embodiment of the invention. Fig. 4 corresponds to Fig. 2 of the first embodiment. Fig. 4 is different from Fig. 2 in that a cooling oil supply passage 57 connecting the impeller cooling channel 44 to the oil tank 35 is continuously and thoroughly formed in the bearing pedestal 5 and the pipe passage 49 described in the first embodiment is not provided. Since configuration other than the cooling oil supply passage 57 is the same as the configuration of the first embodiment, the same portions as the portions of the first embodiment are denoted by the same reference numerals as the reference numerals of the first embodiment and the description thereof will be omitted.

As in the first embodiment, the height H2 of an inlet opening 57a of the cooling oil supply passage 57 is set to be higher than the height H1 of the inlet opening 36a of the bearing oil passage 36. Actions and effects, which are obtained from this structure, are the same as the effects of the first embodiment. Since the cooling oil supply passage 57 is formed in the bearing pedestal 5 as a whole as described above, the installation of the pipe passage 49 of the first embodiment is omitted and the structure can be more simplified.

As described above, according to the turbochargers 1 of the respective embodiments, both the cooling of the compressor impeller 19 during the operation of the engine and a function as an air vent of the oil tank 35 supplying oil to the bearings 27, 28, and 29 after the stop of the engine can be achieved by a simple and rational structure.

The invention is not limited to only the structures of the embodiments, and can be appropriately changed or modified without departing from the scope of the invention. Embodiments, which are changed or modified in this way, are also included in the scope of the right of the invention.

For example, examples in which the invention is applied to a turbocharger provided on a large marine diesel engine have been described in the above-mentioned embodiments, but the invention is not limited to a marine engine and may be applied to turbochargers of other types of engines.

### Reference Signs List

1: turbocharger
3: turbine shaft
5: bearing pedestal
6: exhaust gas turbine
8: centrifugal compressor
19: compressor impeller
27, 28: radial bearing (bearing)
29: thrust bearing (bearing)
31: labyrinth seal
35: oil tank
36: bearing oil passage
36a: inlet opening of bearing oil passage
44: impeller cooling channel
45: groove
47: cooling oil supply passage
47a: inlet opening of cooling oil supply passage
48: internal passage
49: pipe passage
52: cooling oil discharge passage
54: uneven face
H1: height of inlet opening of bearing oil passage
H2: height of inlet opening of cooling oil supply passage
d1: diameter of cooling oil supply passage 47
d2: diameter of cooling oil discharge passage 52

## Claims

1. A turbocharger (1) comprising:
a turbine shaft (3) of which one end is connected to a compressor impeller (19) and which is supported by a bearing;
a bearing pedestal (5) that receives the turbine shaft (3) ;
an oil tank (35) that is provided in the bearing pedestal (5);
a bearing oil passage (36) that connects the oil tank (35) to the bearing;
an impeller cooling channel (44) that is formed in the bearing pedestal (5) and is positioned on a back face side of the compressor impeller (19); and
a cooling oil supply passage (47) that connects the impeller cooling channel (44) to the oil tank (35),
wherein the height (H2) of an inlet opening (47a) of the cooling oil supply passage (47) is higher than the height (H1) of an inlet opening (36a) of the bearing oil passage (36) in the oil tank (35).

2. The turbocharger (1) according to claim 1,
wherein the impeller cooling channel (44) is provided so as to overlap the range of a labyrinth seal that is provided on the back face side of the compressor impeller (19).

3. The turbocharger (1) according to claim 2,
wherein the impeller cooling channel (44) is recessed in a surface, which is in contact with the bearing pedestal (5), of a labyrinth seal ring forming the labyrinth seal.

4. The turbocharger (1) according to any one of claims 1 to 3,
wherein the cooling oil supply passage (47) includes an internal passage (48) that is formed in the bearing pedestal (5) and is connected to the impeller cooling channel (44) from the vicinity of a bottom of the oil tank (35), and a pipe passage (49) that extends upward in the oil tank from an opening of the internal passage (48) close to the oil tank (35), and
an upper end portion of the pipe passage serves as the inlet opening of the cooling oil supply passage.

5. The turbocharger (1) according to any one of claims 1 to 4,
wherein an uneven face (54) is formed on an inner surface of the impeller cooling channel.

6. The turbocharger (1) according to any one of claims 1 to 5,
wherein the cooling oil supply passage (47) communicates with an upper portion of the impeller cooling channel (44), a cooling oil discharge passage (52), which discharges oil, is provided at a lower portion of the impeller cooling channel (44), and the diameter (d2) of the cooling oil discharge passage (52) is smaller than the diameter (d1) of the cooling oil supply passage (47).

7. An engine comprising:
the turbocharger (1) according to any one of claims 1 to 6.

## Patentansprüche

1. Turbolader (1), umfassend:
eine Turbinenwelle (3), von der ein Ende mit einem Verdichterlaufrad (19) verbunden ist und die durch ein Lager gestützt wird;
einen Lagerbock (5), der die Turbinenwelle (3) aufnimmt;
einen Öltank (35), der im Lagerbock (5) bereitgestellt ist;
eine Lagerölleitung (36), die den Öltank (35) mit dem Lager verbindet;
einen Laufradkühlkanal (44), der im Lagerbock (5) gebildet ist und auf einer Rückflächenseite des Verdichterlaufrads (19) positioniert ist; und
eine Kühlölzufuhrleitung (47), die den Laufradkühlkanal (44) mit dem Öltank (35) verbindet,
wobei die Höhe (H2) einer Einlassöffnung (47a) der Kühlölzufuhrleitung (47) höher ist als die Höhe (H1) einer Einlassöffnung (36a) der Lagerölleitung (36) im Öltank (35).

2. Turbolader (1) nach Anspruch 1,
wobei der Laufradkühlkanal (44) bereitgestellt ist, damit er sich mit dem Bereich einer Labyrinthdichtung, die auf der Rückflächenseite des Verdichterlaufrads (19) bereitgestellt ist, überlappt.

3. Turbolader (1) nach Anspruch 2,
wobei der Laufradkühlkanal (44) in einer mit dem Lagerbock (5) in Kontakt stehenden Oberfläche eines Labyrinthdichtungsrings, der die Labyrinthdichtung bildet, versenkt ist.

4. Turbolader (1) nach einem der Ansprüche 1 bis 3,
wobei die Kühlölzufuhrleitung (47) eine innere Leitung (48), die im Lagerbock (5) gebildet ist und mit dem Laufradkühlkanal (44) von der Nähe eines Bodens des Öltanks (35) verbunden ist, und eine Rohrleitung (49) einschließt, die sich im Öltank von einer Öffnung der inneren Leitung (48) dicht beim Öltank (35) nach oben erstreckt, und
ein Abschnitt eines oberen Endes der Rohrleitung als die Einlassöffnung der Kühlölzufuhrleitung dient.

5. Turbolader (1) nach einem der Ansprüche 1 bis 4,
wobei eine ungleichmäßige Fläche (54) auf einer inneren Oberfläche des Laufradkühlkanals gebildet ist.

6. Turbolader (1) nach einem der Ansprüche 1 bis 5,
wobei die Kühlölzufuhrleitung (47) mit einem oberen Abschnitt des Laufradkühlkanals (44) kommuniziert, eine Kühlölausstoßleitung (52), die Öl ausstößt, an einem unteren Abschnitt des Laufradkühlkanals (44) bereitgestellt ist, und der Durchmesser (d2) der Kühlölausstoßleitung (52) kleiner ist als der Durchmesser (d1) der Kühlölzufuhrleitung (47).

7. Motor, umfassend:
den Turbolader (1) nach einem der Ansprüche 1 bis 6.

## Revendications

1. Turbocompresseur (1) comprenant :
un arbre de turbine (3) dont une extrémité est reliée à une roue de compresseur (19) et qui est supporté par un palier ;
un support de palier (5) qui reçoit l'arbre de turbine (3) ;
un réservoir d'huile (35) prévu dans le support de palier (5) ;
un passage d'huile de palier (36) qui relie le réservoir d'huile (35) au palier ;
un canal de refroidissement de roue (44) qui est formé dans le support de palier (5) et est positionné sur un côté de face arrière de la roue de compresseur (19) ; et
un passage d'alimentation en huile de refroidissement (47) qui relie le canal de refroidissement de roue (44) au réservoir d'huile (35),
dans lequel la hauteur (H2) d'une ouverture d'entrée (47a) du passage d'alimentation en huile de refroidissement (47) est supérieure à la hauteur (H1) d'une ouverture d'entrée (36a) du passage d'huile de palier (36) dans le réservoir d'huile (35).

2. Turbocompresseur (1) selon la revendication 1,
dans lequel le canal de refroidissement de roue (44) est prévu de manière à chevaucher l'amplitude d'un joint à labyrinthe qui est prévu sur le côté de face arrière de la roue de compresseur (19).

3. Turbocompresseur (1) selon la revendication 2,
dans lequel le canal de refroidissement de turbine (44) est évidé dans une surface, qui est en contact avec le support de palier (5), d'un anneau d'étanchéité à labyrinthe formant le joint à labyrinthe.

4. Turbocompresseur (1) selon l'une quelconque des revendications 1 à 3,
dans lequel le passage d'alimentation en huile de refroidissement (47) inclut un passage interne (48) qui est formé dans le support de palier (5) et qui est connecté au canal de refroidissement de roue (44) depuis le voisinage d'un fond du réservoir d'huile (35), et un passage de tuyau (49) qui s'étend vers le haut dans le réservoir d'huile depuis une ouverture du passage interne (48) proche du réservoir d'huile (35), et
une partie d'extrémité supérieure du passage de tuyau sert d'ouverture d'entrée du passage d'alimentation en huile de refroidissement.

5. Turbocompresseur (1) selon l'une quelconque des revendications 1 à 4,
dans lequel une face irrégulière (54) est formée sur une surface interne du canal de refroidissement de roue.

6. Turbocompresseur (1) selon l'une quelconque des revendications 1 à 5,
dans lequel le passage d'alimentation en huile de refroidissement (47) communique avec une partie supérieure du canal de refroidissement de la roue (44), un passage de décharge d'huile de refroidissement (52), qui décharge de l'huile, est prévu au niveau d'une partie inférieure du canal de refroidissement de roue (44), et le diamètre (d2) du passage de décharge d'huile de refroidissement (52) est inférieur au diamètre (d1) du passage d'alimentation en huile de refroidissement (47).

7. Moteur comprenant :
le turbocompresseur (1) selon l'une quelconque des revendications 1 à 6.
